(19) Europäisches Patentamt
European Patent Office
Office européen des brevets

(11) EP 0 548 676 B1

(12) **EUROPEAN PATENT SPECIFICATION**

(45) Date of publication and mention
of the grant of the patent:
**24.04.1996 Bulletin 1996/17**

(51) Int Cl.6: **H02P 21/00**

(21) Application number: **92120990.4**

(22) Date of filing: **09.12.1992**

(54) **Flux regulator particularly for drivers of asynchronous electric motors**

Flussregler insbesondere für Treiberstufen von elektrischen Asynchronmotoren

Dispositif de réglage de flux, en particulier pour étages pilotes de moteurs asynchrònes

(84) Designated Contracting States:
**AT BE CH DE DK ES FR GB GR IE IT LI LU MC NL
PT SE**

(30) Priority: **11.12.1991 IT MI913316**

(43) Date of publication of application:
**30.06.1993 Bulletin 1993/26**

(73) Proprietor: **STUDIO TECNICO ING. MONTESSORI
S.a.s., di GIUSEPPE MONTESSORI & Co.
I-20154 Milano (IT)**

(72) Inventor: **Montessori, Giuseppe
IT-20154 Milano (IT)**

(74) Representative: **Modiano, Guido, Dr.-Ing. et al
Modiano & Associati S.r.l.
Via Meravigli, 16
I-20123 Milano (IT)**

(56) References cited:
EP-A- 0 468 499          WO-A-84/01063
US-A- 3 899 725          US-A- 3 911 340

• IEEE TRANSACTIONS ON POWER
ELECTRONICS no. 2, April 1988, N.Y. USA,
pages 192 - 199, SEUNG KI SUL,'A novel
technique for optimal efficiency control of a
current-source inverter-fed induction motor'

## Description

The present invention relates to a flux regulator particularly for drivers of asynchronous electric motors.

In asynchronous motors, the greatest problem encountered is related to speed regulation in order to compete on the same level with direct-current motors.

There are various drivers which offer more or less complicated and sophisticated solutions, with digital and/or analog circuits for regulation and for measuring electrical values which contribute to the regulation of the rotation rate of the asynchronous motor, in a manner so that it can compete with direct-current motors.

There are drivers, known as vector controllers, which must measure the vectors which respectively represent the current and the magnetic flux; said drivers are usually digital and microprocessor-equipped, and are based on highly indirect measurements of the variables and on complicated correlations which limit their precision and operating range. Furthermore, in terms of circuitry, they are very complicated and require complicated programming, and are also quite expensive and difficult to calibrate and maintain.

There are also analog drivers which are based on the measurement of some scalar values of the asynchronous motor in order to ensure a precise and accurate closed-loop control of the motor with a performance, in terms of stress response time, which is extremely lower than that of corresponding digital drivers.

Closed-loop analog drivers usually have problems from the point of view of complexity in manufacture and of the number of physical values involved.

Document US-A-3 899 725 describes a control system for providing a constant braking torque through a higher speed range in an electrical brake system.

The aim of the present invention is to eliminate or substantially reduce the problems described above by providing a flux regulator particularly for drivers of asynchronous electric motors which allows to simplify its constructive complexity, maintaining its effectiveness from the point of view of control.

An object of the present invention is to provide a regulator which allows to reduce its circuital complexity in favor of an improvement in driver response time.

Not least object of the present invention is to provide a regulator which is relatively easy to manufacture and at competitive costs.

This aim, these objects and others which will become apparent hereinafter, are achieved by a flux regulator as claimed in claim 5 and a method for regulating the flux, particularly for asynchronous electric motors, characterized in that it comprises the steps of comparing a measured signal representative of the instantaneous torque provided by an electric motor with a signal representative of the slip frequency of said electric motor in order to generate an error signal; calculating, on the basis of the value of said error signal the value of the supply voltage to be applied to said electric motor.

Further characteristics and advantages of the invention will become apparent from the description of a flux regulator particularly for drivers of asynchronous electric motors, illustrated only by way of non-limitative example in the accompanying drawings, wherein:

figure 1 is a diagram of a known asynchronous electric motor;
figure 2 is a diagram of a driver of a known asynchronous electric motor;
figure 3 is a diagram of a known voltage regulator; and
figure 4 is a diagram of a flux regulator according to the invention.

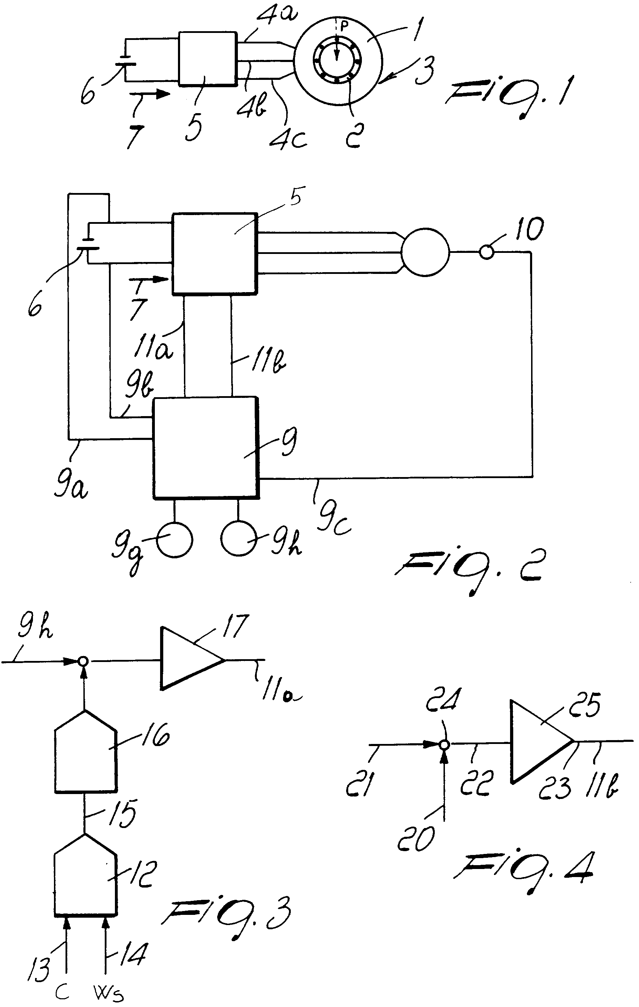

With reference to figure 1, an asynchronous motor 3 comprises a stator 1 and a rotor 2, which are supplied by an inverter 5 by means of power supply phases 4a, 4b and 4c. The inverter 5 is in turn powered by a direct-current source 6 which provides a current 7 to the inverter.

The mechanical torque provided by an asynchronous motor is given, as is known, by the scalar product of the magnetic flux vector $\Phi$ concatenated to the rotor and of the component $I_q$, in quadrature with the magnetic flux vector $\Phi$, of the rotor current, i.e.:

$$C = \Phi \times I_q \qquad (i)$$

The flux $\Phi$ is proportional to the component of the rotor current $I_d$ in phase with said rotor, i.e.

$$\Phi \equiv I_d \qquad (ii)$$

Evidently, it is convenient to operate so that the flux $\Phi$ (or rather the component $I_d$ of the rotor current) is at its maximum and is substantially constant, so as to obtain a preset mechanical torque C with the minimum value of the active current and thus use the motor with maximum efficiency.

It is also known that the rotor current component $I_q$ is given by the following relation:

$$I_q = W_s \, \Phi/R \qquad (iii)$$

where $W_s$ represents the slip frequency and R represents the electrical resistance of the rotor circuit.

Relations (i), (ii) and (iii) allow to obtain the value of the concatenated flux $\Phi$, i.e.:

$$\Phi \equiv I_d = (C/W_s)^{1/2}$$

In a known driver, designated by the reference numeral 9 in figure 2, the values for calculating the mechanical torque C are supplied. Said torque can be obtained, in a per se known manner, from the active power P absorbed by the rotor, which is given by the product of the supply voltage E and of the absorbed current $I_{CC}$, decreased by the losses, divided by the electrical work pulse W, i.e.:

$$C = P/W = (E \, I_{CC})/W$$

The known driver, designated by the reference numeral 9, receives at its input: the supply voltage E 6 and the absorbed current $I_{CC}$ 7, through input terminals 9a and 9b; the measured frequency or pulse $W_m$ of the asynchronous electric motor 3, which is measured by means of a transducer 10 and is supplied to the input of the driver 9 through an input terminal 9c; and the currents, one for each supply phase 4a, 4b and 4c. Furthermore, the operator sets, on the input terminals 9g and 9h, the reference pulse $W_m{}^*$ and the reference magnetic flux $\Phi^*$ or rather the reference current $I_d{}^*$. The supply voltage V and the work pulse W of the asynchronous electric motor 3 are sent by the output terminals 11a and 11b from the driver 9 to the inverter 5.

With reference to figure 3, the circuit schematically shown in said figure is currently used in order to regulate the supply voltage V, or rather in order to regulate the magnetic flux of the asynchronous electric motor 3; said circuit comprises a divider 12 whose terminals receive a signal 13, which represents the momentary mechanical torque of the motor 3, which is measured in a per se known manner, and a signal 14, which represents the slip frequency of the motor 3.

The divider 12 generates a signal which is sent, by means of a connection 15, to a clipper 16 which extracts the square root of the ratio calculated by the divider 12. The extracted signal is subtracted from the signal which arrives from the input terminal 9h, on which an operator has set the work magnetic flux $\Phi^*$, as previously described.

The resulting signal is sent to a flux regulator 17 which generates, in accordance with the input it has received, the work pulse W of the motor 3, which is sent to the inverter 5 through the terminal 11a.

The regulator according to the invention further simplifies the above described operations. It has in fact been observed that the following relations exist:

$$C = \Phi \times I_q$$

$$I_q = W_s \times \Phi$$

so that, if the flux $\Phi$ is constant, the mechanical torque C is proportional to the quadrature component $I_q$, which is in turn proportional to the slip frequency $W_s$, and therefore:

$$C \equiv W_s$$

Therefore, considering that when the flux in the motor 3 is constant the mechanical torque and the slip frequency $W_s$ are mutually proportional, the regulator comprises comparator means which compare a first measured signal 20, representing the momentary mechanical torque of the asynchronous electric motor 3, with a second signal 21, representing the slip frequency of the motor 3, producing a third signal 22, which is supplied to the input of the regulator means (25).

The regulator means generates a fourth signal 23 which represents the supply voltage to be applied to the asynchronous motor 3; said voltage is sent to the inverter 3 by means of the terminal 11b.

The comparator means comprises a subtracting node 24 which receives the first signal 20 and the second signal 21 and produces in output the third signal 22 or error signal.

Practical tests have shown that the invention achieves the intended aim and objects, constituting a flux regulator which is capable of simplifying the circuital complexity of closed-loop drivers of asynchronous electric motors.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Method for regulating the flux, particularly for asynchronous electric motors, characterized in that it comprises the steps of

    comparing a measured signal (20) representative of the instantaneous torque provided by an electric motor (3) with a signal (21) representative of the slip frequency ($w_s$) of said electric motor in order to generate an error signal (22); calculating, on the basis of the value of said error signal (22) the value of the supply voltage (11b) to be applied to said electric motor.

2. Method, according to claim 1, characterized in that said comparing is performed by comparator means (24).

3. Method, according to claim 2, characterized in that said comparator means comprises a subtracting node (24).

4. Method, according to claim 1, characterized in that said calculating of the voltage is performed by regulating means (25) adapted to transform said error signal into said supply voltage.

5. Flux regulator, particularly for drivers of asynchronous electric motors, characterized in that it comprises comparison means (24) suitable to compare a measured signal (20) representative of the momentary mechanical torque (C) provided by an asynchronous electric motor (3) with a signal (21) representative of the slip frequency ($w_s$) of said asynchronous electric motor, in order to generate an error signal (22) which is supplied in input to regulator means (25), said regulator means (25) being suitable to generate a signal (23) representative of the value of the supply voltage to be applied to said asynchronous electric motor (3).

**6.** Regulator according to claim 1, characterized in that said comparison means comprises a subtracting node (24) which receives said measured signal (20) representative of the momentary mechanical torque and said signal (21) representative of the slip frequency ($w_s$).

**7.** Regulator according to the preceding claims, characterized in that said regulator means comprises a regulator (25) which is suitable to generate said signal (23) representative of the value of the supply voltage on the basis of said error signal (22).

**Patentansprüche**

**1.** Verfahren zum Regeln des Flusses, insbesondere bei asynchronen Elektromotoren, dadurch gekennzeichnet, daß es folgende Schritte umfaßt:

- Vergleichen eines für das momentane, von einem Elektromotor (3) gelieferte Drehmoment repräsentativen Meßsignals (20) mit einem für die Schlupffrequenz ($w_s$) des besagten Elektromotors repräsentativen Signal (21), um ein Fehlersignal (22) zu erzeugen;
- Berechnen des Wertes der an den besagten Elektromotor anzulegenden Versorgungsspannung (11b) auf der Basis des Wertes des besagten Fehlersignals (22).

**2.** Verfahren nach Anspruch 1, dadurch gekennzeichnet, daß das besagte Vergleichen von einem Vergleichermittel (24) ausgeführt wird.

**3.** Verfahren nach Anspruch 2, dadurch gekennzeichnet, daß das besagte Vergleichermittel einen Subtrahierknoten (24) aufweist.

**4.** Verfahren nach Anspruch 1, dadurch gekennzeichnet, daß das besagte Berechnen der Spannung von einem Reglermittel (25) ausgeführt wird, das so ausgestaltet ist, daß es das besagte Fehlersignal in die besagte Versorgungsspannung umwandelt.

**5.** Flußregler, insbesondere für Treiberstufen von asynchronen Elektromotoren, dadurch gekennzeichnet, daß er ein Vergleichermittel (24) für das Vergleichen eines für das momentane, von einem asynchronen Elektromotor (3) gelieferte mechanische Drehmoment (c) repräsentativen Meßsignals (20) mit einem für die Schlupffrequenz ($w_s$) des besagten asynchronen Elektromotors repräsentativen Signal (21) aufweist, um ein Fehlersignal (22) zu erzeugen, das als Eingang einem Reglermittel (25) zugeführt wird, wobei da besagte Reglermittel (25) geeignet ist, ein repräsentatives Signal (23) für den Wert der an den besagten asynchronen Elektromotor (3) anzulegenden Versorgungsspannung zu erzeugen.

**6.** Regler nach Anspruch 1, dadurch gekennzeichnet, daß das besagte Vergleichermittel einen Subtrahierknoten (24) aufweist, der das besagte, für das momentane mechanische Drehmoment repräsentative Meßsignal (20) und das besagte, für die Schlupffrequenz ($w_s$) repräsentative Signal (21) empfängt.

**7.** Regler nach den vorhergehenden Ansprüchen, dadurch gekennzeichnet, daß das besagte Reglermittel einen Regler (25) aufweist, der geeignet ist, das besagte, für den Wert der Versorgungsspannung repräsentative Signal (23) auf der Basis des Wertes des besagten Fehlersignals (22) zu erzeugen.

**Revendications**

**1.** Procédé pour réguler le flux, en particulier pour des moteurs électriques asynchrones, caractérisé en ce qu'il comprend les étapes consistant à :

Comparer un signal mesuré (20) représentatif du couple instantané délivré par un moteur électrique (3) avec un signal (21) représentatif de la fréquence de glissement ($w_s$) dudit moteur électrique, afin de générer un signal d'erreur (22) ;
Calculer, en fonction de la valeur dudit signal d'erreur (22), la valeur de la tension d'alimentation (11b) à appliquer audit moteur électrique.

**2.** Procédé selon la revendication 1, caractérisé en ce que ladite comparaison est effectuée par des moyens formant comparateur (24).

**3.** Procédé selon la revendication 2, caractérisé en ce que lesdits moyens formant comparateur comprennent un noeud de soustraction (24).

**4.** Procédé selon la revendication 1, caractérisé en ce que ledit calcul de la tension est effectué par des moyens de régulation (25) adaptés pour transformer ledit signal d'erreur en ladite tension d'alimentation.

**5.** Régulateur de flux, en particulier pour des dispositifs d'excitation de moteurs électriques asynchrones, caractérisé en ce qu'il comprend des moyens de comparaison (24) appropriés pour comparer un signal mesuré (20) représentatif du couple mécanique momentané (C) délivré par un moteur électrique asynchrone (3) avec un signal (21) représentatif de la fréquence de glissement ($w_s$) dudit moteur électrique asynchrone, afin de générer un signal d'erreur (22) qui est délivré en entrée à des moyens formant régulateur (25), lesdits moyens formant régulateur (25) étant appropriés pour générer un signal (23) représentatif de la valeur de la tension d'alimentation à appliquer audit moteur électrique asynchrone (3).

6. Régulateur selon la revendication 1, caractérisé en ce que lesdits moyens de comparaison comprennent un noeud de soustraction (24) qui reçoit ledit signal mesuré (20) représentatif du couple mécanique momentané et ledit signal (21) représentatif de la fréquence de glissement (ws).

7. Régulateur selon les revendications précédentes, caractérisé en ce que lesdits moyens formant régulateur comprennent un régulateur (25) qui est approprié pour générer ledit signal (23) représentatif de la valeur de la tension d'alimentation en fonction dudit signal d'erreur (22).

Fig. 1

Fig. 2

Fig. 3

Fig. 4